(19) Europäisches Patentamt
European Patent Office
Office européen des brevets

(11) EP 1 533 105 A1

(12) EUROPEAN PATENT APPLICATION

(43) Date of publication:
**25.05.2005 Bulletin 2005/21**

(51) Int Cl.7: **B29C 65/16**, C09B 67/00, C08K 5/42

(21) Application number: **04024146.5**

(22) Date of filing: **09.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.10.2003 JP 2003355551**

(71) Applicant: **Orient Chemical Industries, Ltd.**
**Osaka-shi, Osaka 535-0022 (JP)**

(72) Inventors:
- **Hatase, Yoshiteru**
**Neyagawa-shi Osaka 572-8581 (JP)**
- **Sugawara, Syuuji**
**Neyagawa-shi Osaka 572-8581 (JP)**
- **Okanishi, Toshihiro**
**Neyagawa-shi Osaka 572-8581 (JP)**

(74) Representative: **von Kreisler Selting Werner**
**Patentanwälte**
**Deichmannhaus am Dom**
**Bahnhofsvorplatz 1**
**50667 Köln (DE)**

(54) **Laser-transmissible colored resin composition and method for laser welding**

(57) A laser-transmissible colored resin composition comprises an anthraquinone-type acidic dye represented by the following chemical formula (1)

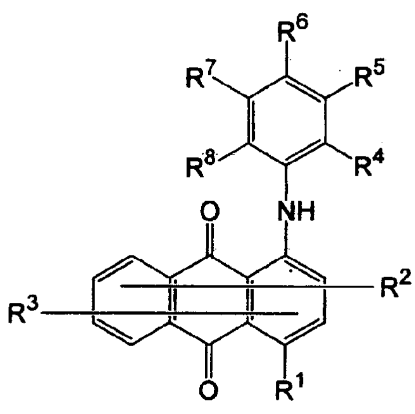

· · · (1)

[in the chemical formula (1), $-R^1$ is a hydrogen atom, a hydroxyl group or an amino group, $-R^2$ and $-R^3$ are a hydrogen atom, an alkyl group, a halogen atom, an alkoxyl group or $-SO_3M$ which M is a hydrogen atom, an alkaline metal or an ammonium, $-R^4$, -R5, $-R^6$, $-R^7$- and $-R^8$ are a hydrogen atom, an alkyl group, an acyl group, an acylamide group, an acyl-N-alkylamide group, a halogen atom, an alkoxyl group or $-SO_3M$ which M is same above, and at least one of $-R^2$, $-R^3$, $-R^4$, $-R^5$, $-R^6$, $-R^7$ and $-R^8$ is $-SO_3M$]. It may be represented by the following chemical formula (2).

EP 1 533 105 A1

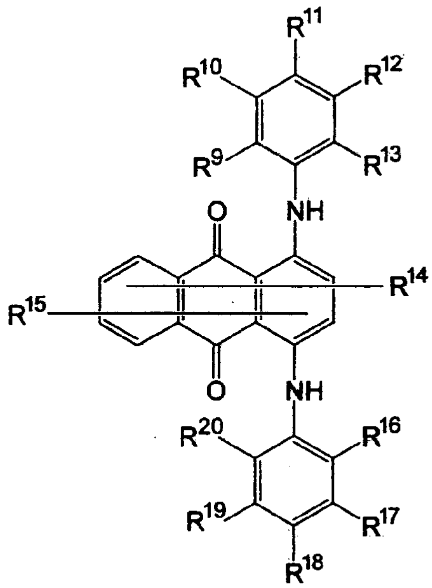

・・・（2）

# Fig. 1

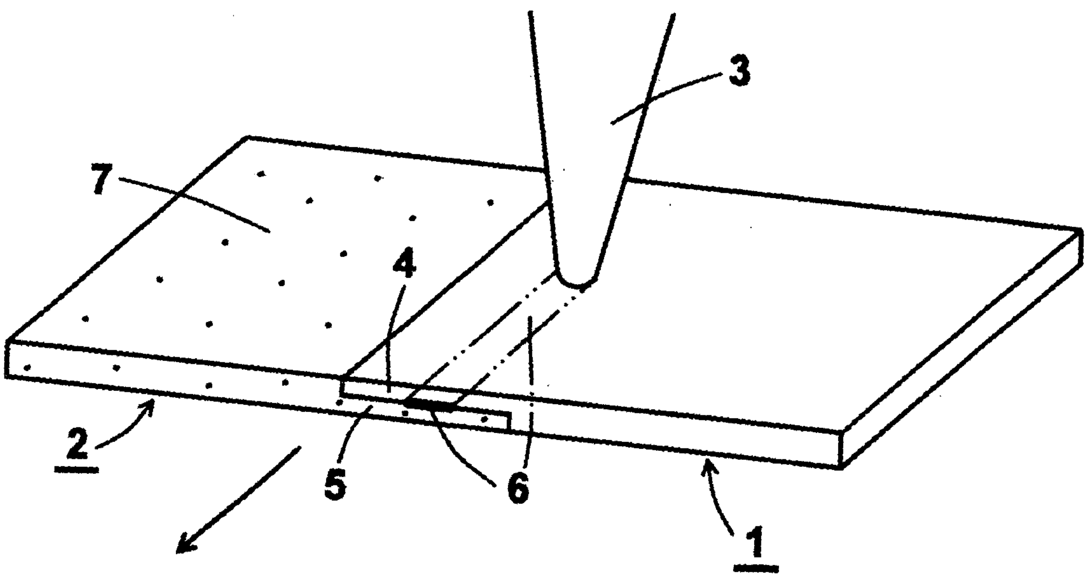

## Description

This invention relates to a laser-transmissible colored resin composition including an anthraquinone-type acidic dye, and a method for laser welding.

For joining mutually workpieces made from a synthetic resin material, a method for laser welding is known.

Such the laser welding is executed for example as follows. As shown in Fig. 1, a workpiece made from a laser-transmissible material and another workpiece made from a laser-absorptive material are put together. Laser is irradiated from the laser-transmissible workpiece side towards the laser-absorptive workpiece side. The laser transmitted through the laser-transmissible workpiece, is absorbed into the laser-absorptive workpiece and causes the exothermic. The laser-absorptive workpiece at a laser-absorbing neighborhood is melted by the exothermic. Then it melts the laser-transmissible workpiece, to weld both workpieces. After cooling, the laser-transmissible workpiece and the laser-absorptive workpiece are firmly joined with sufficient welding strength.

The following merits of the laser welding are mentioned. They are feasibility of the welding without contact of a laser beam source and workpieces being due to weld; little thermal influence of periphery by the local exothermic; no threat of mechanical vibration; feasibility of the welding of the precise workpieces or the three-dimensional workpieces; superior reproducibility; maintaining of sufficient airtightness; great welding strength; difficulty of recognizing a boundary line of the welding by visual observation; no generation of dust.

The laser welding is executed by simple operation certainly. The laser welding achieves the equal or more welding strength, as compared with prior joining of resin workpieces for example clamping by clamps such as bolts, screws and clips, bonding by a bonding agent, vibration welding, ultrasonic welding. Also it achieves labor saving, improving of productivity, and decreasing of working cost, because of little thermal or vibratory influence. So the laser welding is applied to joining of functional workpieces or electric workpieces that is due to avoid the thermal or vibratory influence under an automobile industry and an electric or electronic industry. And the laser welding is adapted to joining of resin workpieces having an intricate shape.

As a prior art of the laser welding in Japanese Patent Provisional Publication No. 11-170371, a method for the laser welding is mentioned. The method comprises a step that an opaque workpiece made from a laser-absorptive synthetic thermoplastic resin and a colorless transparent workpiece made from a laser-transmissible synthetic thermoplastic resin are put together, and then the laser is irradiated in focus at a put portion thereof together. When the welded portion is watched from a side of the colorless transparent workpiece, the welded portion and a non-welded portion differ in color and smoothness and look unattractive.

In Japanese Patent Provisional Publication Nos. 2002-228830 and 2002-228831, anthrapyridone-type halochromy dyes as colorant for a laser-transmissible colored thermoplastic resin composition are used respectively.

It is desired that a laser-transmissible colored thermoplastic resin composition does not cause fading out a hue under a thermal treatment procedure before the laser welding, does not cause sublimation of colorant in the composition, and has sufficient laser-transmissible property.

The present invention has been developed to solve the foregoing problems.

It is an object of the present invention to provide a laser-transmissible colored thermoplastic resin composition that does not cause fading out a hue of workpieces made from a colored synthetic thermoplastic resin under the thermal treatment procedure before laser welding thereof, does not virtually cause sublimation of colorant, and has excellent stability of long-term storage and a sufficient laser-transmissible property for laser welding.

It is another object of the present invention to provide a method for laser welding using the composition.

A laser-transmissible colored thermoplastic resin composition of the present invention developed for accomplishing the foregoing object, comprises a specific anthraquinone-type acidic dye.

It is preferable that the laser-transmissible colored thermoplastic resin composition of the present invention comprises the anthraquinone-type acidic dye represented by the following chemical formula (1) or (2).

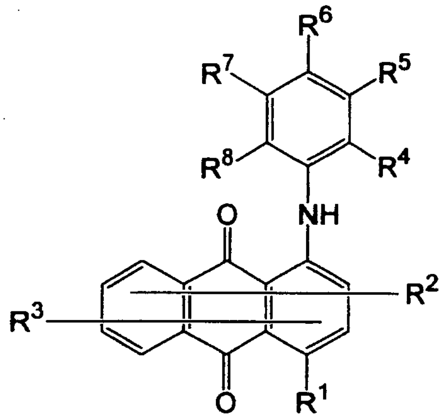

· · · (1)

[in the chemical formula (1),

$-R^1$ is selected from the group consisting of a hydrogen atom, a hydroxyl group and an amino group,

$-R^2$ and $-R^3$ are same or different to each other, and one thereof is selected from the group consisting of a hydrogen atom, an alkyl group, a halogen atom, an alkoxyl group and $-SO_3$ that M is a hydrogen atom, an alkaline metal or an ammonium,

-R4, $-R^5$, $-R^6$, $-R^7$- and $-R^8$ are same or different to each other, and one thereof is selected from the group consisting of a hydrogen atom, an alkyl group, an acyl group, an acylamide group, an acyl-N-alkylamide group, a halogen atom, an alkoxyl group and $-SO_3M$ which M is same above,

and at least one of $-R^2$, $-R^3$, $-R^4$, $-R^5$, $-R^6$, $-R^7$ and $-R^8$ is $-SO_3M$

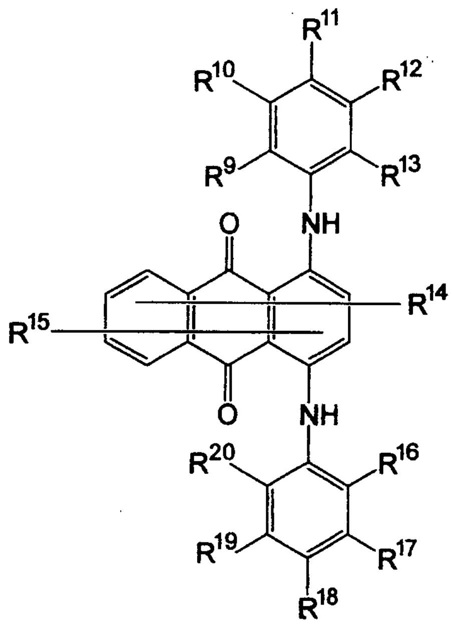

· · · (2)

[in the chemical formula (2),

$-R^{14}$ and $-R^{15}$ are same or different to each other, and one thereof is selected from the group consisting of a hydrogen atom, an alkyl group, a halogen atom, an alkoxyl group an amino group, a nitro group, and $-SO_3$ that M is same above,

$-R^9$, $-R^{10}$, $-R^{11}$, $-R^{12}$, $-R^{13}$, $-R^{16}$, $-R^{17}$, $-R^{18}$, $-R^{19}$, and $-R^{20}$ are same or different to each other, and one thereof is selected from the group consisting of a hydrogen atom, an alkyl group, an acyl group, an acylamide group, an acyl-N-alkylamide group, a halogen atom, an alkoxyl group and $-SO_3M$ which M is same above,

and at least one of $-R^9$, $-R^{10}$, $-R^{11}$, $-R^{12}$, $-R^{13}$, $-R^{14}$, $-R^{15}$, $-R^{16}$, $-R^{17}$, $-R^{18}$, $-R^{19}$, and $-R^{20}$ is $-SO_3M$]

A method for the laser welding of the present invention comprises:

putting a laser-transmissible workpiece made from the laser-transmissible colored resin composition and a laser-absorptive workpiece together,
irradiating laser to the laser-transmissible workpiece,
welding the laser-transmissible workpiece and the laser-absorptive workpiece at a put portion thereof together, by the laser that transmits through the laser-transmissible workpiece and is absorbed into the laser-absorptive workpiece.

The laser-transmissible colored resin composition of the present invention has a sufficient laser-transmissible property of the laser ranging from approximate 800 nm of wavelength by semiconductor laser to approximate 1200 nm of wavelength by yttrium aluminum garnet (YAG) laser. And the laser-transmissible colored thermoplastic resin composition has excellent durability such as heat resistance and light resistance, excellent migration resistance, excellent chemical resistance, a vivid hue. The laser-transmissible colored thermoplastic resin composition can be used for the method for the laser welding, because it has the sufficient laser-transmissible property, and the excellent durability such as the heat resistance and the light resistance.

According to the method for the laser welding of the present invention, the laser is irradiated in order to transmit through the laser-transmissible workpiece, and in order to be absorbed into the laser-absorptive workpiece at the put portion thereof together. The irradiated laser reaches the laser-absorptive workpiece, to cause the exothermic. Then both of the workpieces are melted by the exothermic to weld firmly the both at the put position thereof together.

Fig. 1 shows the method for the laser welding of both of the laser-transmissible workpiece made from the laser-transmissible colored resin composition of the present invention and the laser-absorptive workpiece in an operating condition.

The anthraquinone-type acidic dye comprised in the laser-transmissible colored resin composition is represented by the above chemical formula (1) or (2).

In the chemical formula (1), examples of $-R^1$ are the hydrogen atom; the hydroxyl group; and the amino group.

Examples of $-R^2$ and $-R^3$ are the hydrogen atom; the alkyl group such as alkyl having 1 to 12 carbon atoms illustrated methyl, ethyl, propyl, iso-propyl, n-butyl, tert-butyl, n-pentyl, iso-pentyl, hexyl, heptyl, octyl and so on; the halogen atom such as Cl, Br and so on; the alkoxyl group such as alkoxyl having 1 to 8 carbon atoms illustrated methoxy, ethoxy propoxy and so on; $-SO_3M$ which M is the hydrogen atom, the alkaline metal illustrated Na, Li, K and so on, or the ammonium.

Examples of $-R^4$, $-R^5$, $-R^6$, $-R^7$- and $-R^8$ are the hydrogen atom; the alkyl group such as alkyl having 1 to 12 carbon atoms illustrated methyl, ethyl, propyl, iso-propyl, n-butyl, tert-butyl, n-pentyl, iso-pentyl, hexyl, heptyl, octyl and so on; the acyl group; the acylamide group; the acyl-N-alkylamide group of which example of an alkyl group is alkyl having 1 to 8 carbon atoms such as methyl, ethyl, propyl, iso-propyl, n-butyl, tert-butyl, n-pentyl, iso-pentyl, hexyl, heptyl, octyl and so on; the halogen atom such as Cl, Br and so on; the alkoxyl group such as alkoxyl having 1 to 8 carbon atoms for example methoxy, ethoxy, propoxy and so on; $-SO_3M$ which M is same above.

The anthraquinone-type acidic dye represented by the above chemical formula (1), is with proviso that at least one of $-R^2$, $-R^3$ $-R^4$, $-R^5$, $-R^6$, $-R^7$- and $-R^8$ is $-SO_3M$. In short, chemical structure of the chemical formula has at least one of $-SO_3M$

In the chemical formula (2), examples of $-R^{14}$ and $-R^{15}$ are same or different to each other, and are the hydrogen atom; the alkyl group such as alkyl having 1 to 12 carbon atoms illustrated methyl, ethyl, propyl, iso-propyl, n-butyl, tert-butyl, n-pentyl, iso-pentyl, hexyl, heptyl, octyl and so on; the halogen atom such as Cl, Br and so on; the alkoxyl group such as alkoxyl having 1 to 8 carbon atoms illustrated methoxy, ethoxy propoxy and so on; amino group; nitro group; $-SO_3M$ which M is same above.

Examples of $-R^9$, $-R^{10}$, $-R^{11}$, $-R^{12}$, $-R^{13}$, $-R^{16}$, $-R^{17}$, $-R^{18}$, $-R^{19}$, and $-R^{20}$ are same or different to each other, and are the hydrogen atom; the alkyl group such as alkyl having 1 to 12 carbon atoms illustrated methyl, ethyl, propyl, iso-propyl, n-butyl, tert-butyl, n-pentyl, iso-pentyl, hexyl, heptyl, octyl and so on; the acyl group; the acylamide group; the acyl-N-alkylamide group of which example of an alkyl group is alkyl having 1 to 8 carbon atoms such as methyl, ethyl, propyl, iso-propyl, n-butyl, tert-butyl, n-pentyl, iso-pentyl, hexyl, heptyl, octyl and so on; the halogen atom such as Cl, Br and so on; the alkoxyl group such as alkoxyl having 1 to 8 carbon atoms for example methoxy, ethoxy, propoxy and so on; $-SO_3$ which M is same above.

The anthraquinone-type acidic dye represented by the above chemical formula (2), is with proviso that at least one of $-R^9$, $-R^{10}$, $-R^{11}$, $-R^{12}$, $-R^{13}$, $-R^{14}$, $-R^{15}$, $-R^{16}$, $-R^{17}$, $-R^{18}$, $-R^{19}$, and $-R^{20}$ is $-SO_3M$. In short, chemical structure of the chemical formula has at least one of $-SO_3M$.

Examples of the anthraquinone-type acidic dye represented by the above chemical formula (1) or (2) are as follows. This invention is not intended to be limited to the following specific examples.

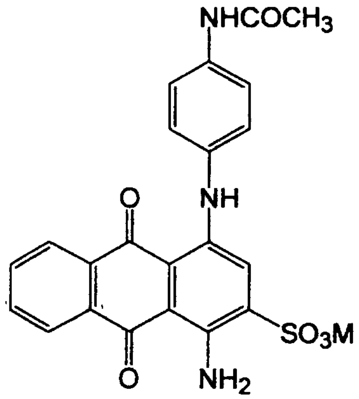

Compound Example No. 1-1

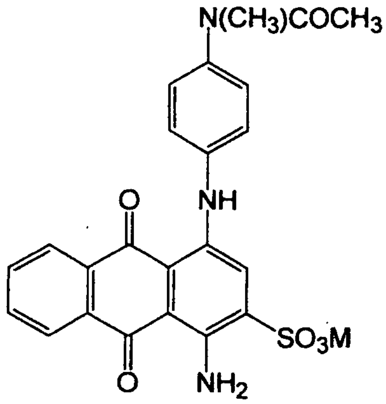

Compound Example No. 1-2

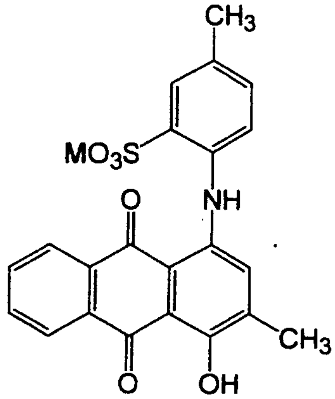

Compound Example No. 1-3

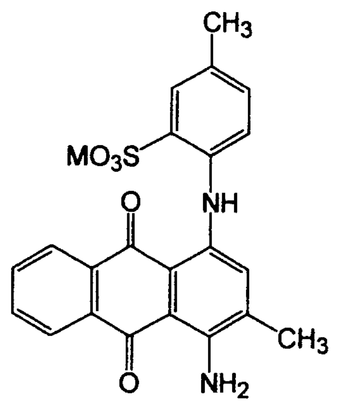

Compound Example No. 1-4

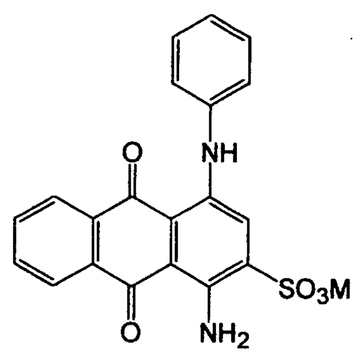

Compound Example No. 1-5

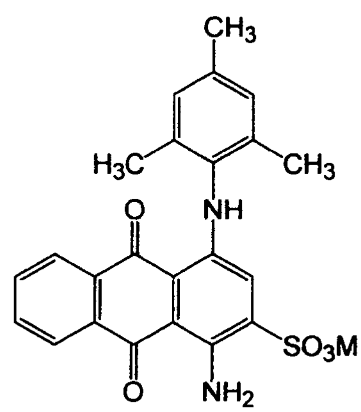

Compound Example No. 1-6

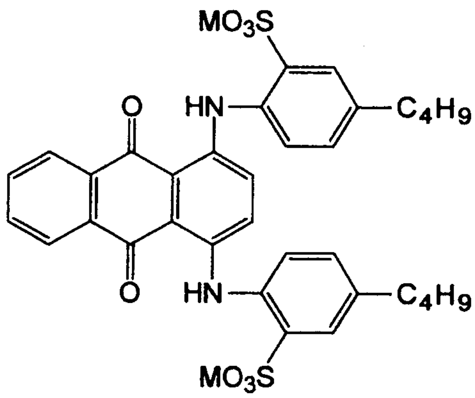

Compound Example No. 1-7

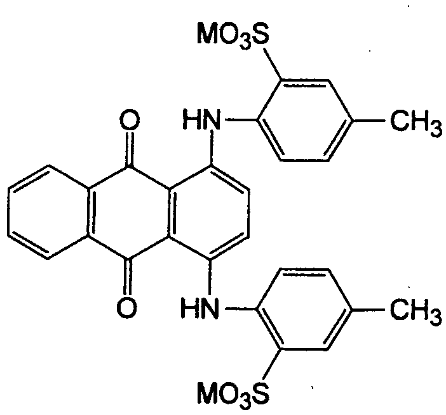

Compound Example No. 1-8

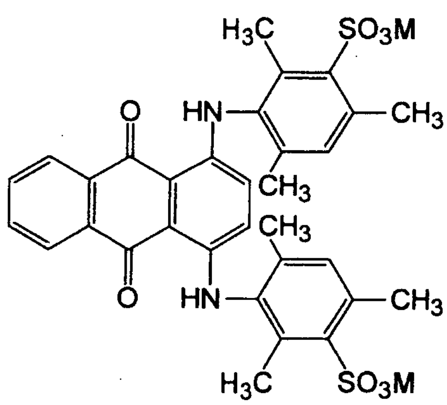

Compound Example No. 1-9

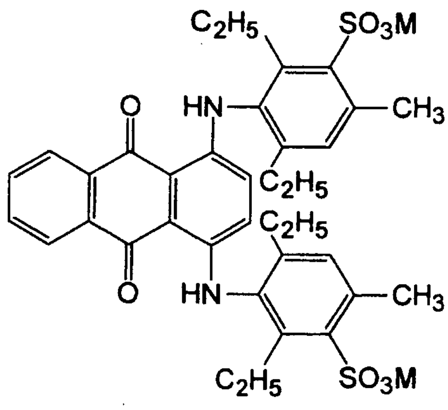

Compound Example No. 1-10

As shown in the chemical formula (1) or (2), the anthraquinone-type acidic dye has -$SO_3M$ wherein M is the hydrogen atom, the alkaline metal or the ammonium in its chemical structure. It is assumed that a functional group having M causes especially an anchor effect in the resin composition, to inhibit a phenomenon of the sublimation.

As the purity of the dye increases, the inhibition of the phenomenon of the sublimation thereof increases.

As the purity of the dye decreases, relatively byproducts tend to increase with the contamination. The byproducts have lower molecule weight than the dye. Consequently solubility of the dye into the resin increases, it causes the phenomenon of the sublimation of the dye under high temperature remarkably, and it tends to decrease the heat resistance of the resin composition. It is preferable that the purity of the dye represented by the desired chemical formula (1) is 90% or more.

The anthraquinone-type acidic dye generally indicates a hue of blue color. For instance, the dye, which has a wavelength of absorption maximum ranging from 580 to 630 nm, gives the color of its wavelength range. The colorant in the laser-transmissible colored thermoplastic resin may include an additional dye with the above anthraquinone-type acidic dye. The additional dye has absorption range which is outside of absorption range of just visible rays or supplementary inside of the absorption range of the visible rays, and has transmission range of the laser ranging wavelength of 800 to 1200 nm. Sole additional colorant or a blend of the plural additional colorants may be used. It is used as multi-colored colorant blending the above anthraquinone-type acidic dye and the excellent laser-transmissible additional colorant which indicates the hue of one color of red, yellow, orange, and so on. Examples of the multi-colored colorant having the hue of black are mixtures of a blue dye of the above anthraquinone-type acidic dye, and the other red or yellow colorant. For using the laser-transmissible colored resin composition industrially, especially the black resin composition is important.

Examples of the additional colorant that colors the laser-transmissible colored resin composition are laser-transmissible organic dyes or pigments. They are not intended to be limited to the specific chemical structure thereof. The concrete examples of the organic dyes and pigments are various dyes or pigments of azomethine-type, anthraquinone-type, quinacridone-type, dioxazine-type, diketopyrrolopyrrole-type, anthrapyridone-type, isoindolinone-type, indanthrone-type, perinone-type, perylene-type, indigo-type, thioindigo-type, quinophthalone-type, quinoline-type, triphenylmethane-type.

Examples of the multi-colored colorant are combinations of the blue or violet anthraquinone-type acidic dye, and the yellow and/or red additional colorant. The multi-colored colorants indicate various hues such as the green illustrated by combination of blue and yellow, the violet illustrated by combination of blue and red, the black illustrated by combination of blue and yellow and red or combination of violet and yellow.

Example of the red colorant that is blended with the above anthraquinone-type acidic dye is halochromy dye prepared from ditolylguanidine, and one of C.I. Acid Red 80, C.I. Solvent Red 179 and C.I.Acid Red 144.

Examples of the yellow colorant that is blended with the above anthraquinone-type acidic dye are C.I. Solvent Yellow 163, C.I. Acid Yellow 4 and so on.

Examples of the orange colorant that is blended with the above anthraquinone-type acidic dye are C.I. Acid Orange 56, C.I. Solvent Orange 60 and so on.

Examples of the resin used for the laser-transmissible colored resin composition are a laser-transmissible resin used as a dispersant for the pigment, a known resin used as a carrier resin for masterbatches or colored pellets and so on. Concrete examples of the resin are typical thermoplastic resins such as polyamide resin; polyethylene resin; polypropylene resin; polystyrene resin; polymethylpentene resin; polymethacrylate resin; polyacrylamide resin; polyethylenevinylalcohol(EVOH) resin; polycarbonate resin; polyester resin illustrated by polyethylene terephthalate (PET) resin and polybutylene terephthalate (PBT) resin; polyacetal resin; polyvinyl chloride resin; polyvinylidene chloride resin; polyphenylene oxide resin; polyphenylene sulfide resin; polyarilate resin; polyallylsulfone resin; fluorine-contained resin; liquid crystal polymer and so on.

Further, examples of the resin are copolymer of two or more above-mentioned thermoplastic resins. Concrete examples of the resin are acrylonitrile-styrene copolymer resin (AS); acrylonitrile-butadiene-styrene copolymer resin (ABS); acrylonitrile-ethylene propylene diene monomer-styrene copolymer resin (AES); polyamide-polybutylene terephthalate copolymer resin (PA-PBT); polyethylene terephthalate-polybutylene terephthalate copolymer resin (PET-PBT); polycarbonate-polybutylene terephthalate copolymer resin (PC-PBT); polycarbonate-polyamide copolymer resin (PC-PA) and so on. And the other concrete examples of the resin are thermoplastic elastomer such as polystyrene-type thermoplastic elastomer, polyolefin-type thermoplastic elastomer, polyurethane-type thermoplastic elastomer, polyester-type thermoplastic elastomer; synthetic wax containing thereof as a main component; natural wax and so on. It is not intended to be limited to specific molecular weight of the above thermoplastic resin.

It is preferable that the thermoplastic resins used for the laser-transmissible colored resin composition are polyester resin which may be polyethylene terephthalate (PET) resin or polybutylene terephthalate (PBT) resin; polyolefin resin; or polyamide resin which may be nylon.

Examples of the polyester resin are polyethylene terephthalate resin that is prepared by condensation polymerization of terephthalic acid and ethylene glycol; and polybutylene terephthalate resin that is prepared by condensation polymerization of terephthalic acid and butylene glycol. Examples of the other polyester resins are copolymers that a part of terephthalic acid component of the above polyethylene terephthalate resin being for example 15 mol% or less such as 0.5 to 15 mol%, preferably 5 mol% or less such as 0.5 to 5 mol%, and/or a part of ethylene glycol component or butylene glycol component thereof for example 15 mol% or less such as 0.5 to 15 mol%, preferably 5 mol% or less such as 0.5 to 5 mol%, are substituted for the other components. It may be blended two or more polyester resins.

Examples of the other components that substitutes the part of terephthalic acid component are aromatic dicarboxylic acid such as isophthalic acid, naphthalenedicarboxylic acid, diphenyldicarboxylic acid, diphenoxyethanedicarboxylic acid, diphenyletherdicarboxylic acid, diphenylsulfonedicarboxylic acid and so on; alicyclic dicarboxylic acid such as hexahydroterephthalic acid, hexahydroisophthalic acid and so on; aliphatic dicarboxylic acid such as adipic acid, sebacic acid, azelaic acid and so on; bifunctional carboxylic acid such as p-beta-hydroxyethoxy benzoic acid and so on. They are used solely or plurally.

Examples of the other components that substitutes the part of ethylene glycol or butylene glycol are multifunctional compounds such as glycol illustrated by trimethylene glycol, tetramethylene glycol, hexamethylene glycol, decamethylene glycol, neopentyl glycol, diethylene glycol, 1,1-cyclohexanedimethylol, 1,4-cyclohexanedimethylol, 2,2-bis (4'-beta-hydroxyethoxyphenyl)- propane, bis(4'-beta-hydroxyethoxyphenyl)sulfonic acid and so on; functional compounds thereof. They are used solely or plurally. It is preferable that the polybutylene terephthalate resin is used for the electric workpieces and automobile workpieces.

It is not intended to be limited to the specific polyolefin resins. Examples of the polyolefin resin are homopolymer and copolymer prepared with alpha-olefins such as ethylene, propylene, butene-1, 3-methylbutene-1 , 4-methylpentene-1, octene-1 and so on. The other examples of polyolefin resin are copolymers of the above-mentioned olefins and an unsaturated monomer that can co-polymerize with them. The copolymer may be a block copolymer, a random copolymer, or a graft copolymer. Concrete examples of the polyolefin are polyethylene resin such as high-density polyethylene, middle-density polyethylene, low-density polyethylene, low-density polyethylene having straight chain, ethylene-vinyl acetate copolymer, ethylene-ethyl acrylate copolymer and so on; polypropylene resin such as propylene homopolymer, propylene-ethylene block copolymer, and propylene-ethylene random copolymer, propylene-ethylene-butene-1 copolymer; polybutene-1; poly(4-methylpentene-1 ) and so on. They are used solely or plurally. It is preferable that polyolefin resin is the polypropylene resin and/or the polyethylene resin, and further preferable that the polyolefin resin is the polypropylene resin. The polypropylene resin is not intended to be limited to the specific resin and is used within extensive molecular weight.

Incidentally, the polyolefin resin may be an acid-denaturalized polyolefin that is denaturalized by an unsaturated carboxylic acid or a derivative thereof; a foam resin prepared using a foaming agent such as foam polypropylene. And polyolefin resin may include ethylene-alpha-olefin copolymer rubber; ethylene-alpha-olefin-nonconjugated diene copolymer such as ethylene propylene diene monomer(EPDM) and so on; ethylene-aromatic monovinyl compound-conjugated diene copolymer rubber, or hydrogenated rubber thereof.

Examples of the polyamide resin are nylon such as nylon 6, nylon 66, nylon 46, nylon 11, nylon 12, nylon 69, nylon 610, nylon 612, nylon 96, non-crystal nylon, nylon having high melting point, nylon RIM, nylon MIX6 and so on; copolymer of two or more kinds thereof, such as nylon 6/66 copolymer, nylon 6/66/610 copolymer, nylon 6/66/11/12 copolymer, crystal nylon/noncrystal nylon copolymer and so on. The polyamide resin may be mixed polymers of the above polyamide resin and the other synthetic resins. Examples of the mixed polymers are polyamide/polyester mixed

polymers, polyamide/polyphenyleneoxide mixed polymers, polyamide/polycarbonate mixed polymers, polyamide/polyolefin mixed polymers, polyamide/styrene/acrylonitrile mixed polymers, polyamide/polyacrylate mixed polymers, polyamide/silicone mixed polymers, and so on. They are used solely or plurally.

The colorant content in the laser-transmissible colored resin composition is preferably 0.01 to 10 weight%, further preferably 0.1 to 5 weight%, furthermore preferably 0.1 to 1 weight% to the thermoplastic resin.

Laser-transmissivity of the laser-transmissible colored resin composition under wavelength 940nm, is given as T(colored resin). Laser-transmissivity of a laser-transmissible non-colored resin composition that is same with the laser-transmissible colored resin composition except for including no colorant, is given as T(non-colored resin). T (colored resin)/T(non-colored resin) that is ratio thereof, is preferably 0.5 or more, further preferably 0.7 to 1.1, furthermore preferably 0.8 to 1.1.

The laser-transmissible colored resin composition may properly include various reinforcing agents in response to a use and a purpose. The reinforcing agents, which are generally used for reinforcement of the synthetic resin, are not intended to be limited. Examples of the reinforcing agent are glass fiber, carbon fiber, the other inorganic fibers; and organic fiber made from aramid, polyphenylenesulfide, nylon, polyester, liquid crystal polymer and so on. The glass fiber is preferably used for reinforcement of the resin desired transparent. It is preferable that length of the glass fiber is 2 to 15 mm and a diameter thereof is 1 to 20 microns. A shape of the glass fiber is not intended to be limited. Examples of the shape thereof are roving, milled fiber and so on. The glass fiber is used solely or plurally. The glass fiber content is preferably 5 to 120 weight% to the thermoplastic resin of 100 weight%. If it is less than 5 weight%, it is difficult that sufficient reinforcement effect of the glass fiber is caused. If it is more than 120 weight%, moldability tends to decrease. It is preferably 10 to 60 weight%, further preferably 20 to 50 weight %.

The laser-transmissible colored resin composition may include various additive agents if necessary. Examples of the additive agent are an auxiliary coloring agent, a dispersant, a filler, a stabilizer, a plasticizer, a reforming agent, an ultraviolet-absorptive agent (or a light-stabilizer), an antioxidant, an antistatic agent, a lubricant, a mold releasing agent, a crystallization accelerator, a crystalline germ agent, a flame retarder, an elastomer for improvement of shock resistance and so on.

The laser-transmissible colored resin composition is prepared by an arbitrary method for blending materials. It is preferable that the materials are generally blended as homogeneously as possible. For example, the resin composition may be prepared by blending all materials homogeneously with a mixer such as a blender., a kneader, a banbury mixer, a roll, an extruder and so on. The other resin compositions may be prepared by blending some of the materials with the mixer and then by blending the remainder of the materials homogeneously. The other resin compositions as colored grain pellets may be prepared by dry-blending the materials ahead, melting and kneading them homogeneously, extruding them as wire with the heated extruder, and then cutting with desired length.

The laser-transmissible colored resin composition as masterbatches may be prepared by an arbitrary method. For example, the masterbatches may be prepared by mixing the resin powder or the pellets as base of the masterbatches, and the colorant with the mixer such as a tumbler, a supermixer and so on, heating and melting with the extruder, a batch-type kneader or a roll-type kneader and so on, and then forming pellets or grain. The other masterbatches may be prepared by adding the colorant to a synthesized resin for the masterbatches in reaction mixture including solvent, and then removing the solvent.

Molding process of the laser-transmissible colored resin composition may be executed by general various procedures. For example, the molding process may be executed using the colored pellets with a processing machine such as an extruder, an injection molding machine, a roll mill and so on. The other molding process may be executed with a proper mixer by mixing the pellets or the grain made from the transparent resin, the granulated colorant, and the additive agent if necessary , and then molding thereof with the processing machine. The other molding process may be executed by adding the colorant to the monomer including a proper polymerization catalyst, polymerizing thereof to obtain the desired resin, and then molding the resin by a proper procedure. Examples of the procedure of molding are general molding procedures such as injection molding, extrusion molding, compression molding, foaming molding, blow molding, vacuum molding, injection blow molding, rotational molding, calendaring molding, solution casting and so on. The laser-transmissible workpieces having various shapes are obtained by the procedure of molding.

The method for the laser welding of the present invention comprises:

putting the laser-transmissible workpiece made from the above-mentioned laser-transmissible colored thermoplastic resin composition and the laser-absorptive workpiece together,
irradiating the laser to the laser-transmissible workpiece,
welding the laser-transmissible workpiece and the laser-absorptive workpiece at put portion together thereof, by the laser that transmits through the laser-transmissible workpiece and is absorbed into the laser-absorptive workpiece.

Merits of the method for the laser welding are improving a variety of shape of molds because of feasibility of

three dimensional welding; improving design because of having no burrs on surface of welding that differs from a method of vibration welding; generating of no vibration and no abrasion powder; and causing feasibility of application to electric workpieces and so on.

Demerits of the method for the laser welding are necessity of prior industrial investment such as a laser welding machine; generating of a gap between the welded workpieces by the formed sink marks after welding thereof. Especially, the demerit of the gap is the most important problem for an operator of the laser welding machine.

For the present, the operator makes a holding implement such as a clamp that fits the shape of the welded workpieces. If the welded workpieces have 0.02mm of the gap, the welding strength decreases to half as compared with that of the welded workpieces having no gap. If the welded workpieces have 0.05mm or more of the gap, welding cannot be executed.

Examples of a laser irradiation procedure are a scanning type that laser beam source moves; a masking type that the welding workpieces move; a multi-irradiating type that the welding workpieces are irradiated by the laser from multi way; and so on. The laser irradiation procedure under the automobile industry is the scanning type. The scanning speed thereof is 5 m/min. as standard production tact time.

In principle, the laser welding takes advantage of conversion of light energy of the laser to thermal energy. So the welding property is influenced by condition of the laser welding strikingly.

Generally, quantity of surface heat energy that the laser-absorptive workpiece accepts from the laser, can be calculated by the following numerical expression.

$$\text{Quantity of Surface Heat of Laser-absorptive Workpiece (J/mm}^2\text{)} = \text{Output Power of Laser (W) / Scanning Speed (mm/sec.)/ Diameter of Laser Spot(mm)} \quad \text{(I)}$$

According to the numerical expression, it is evident that raising the scanning speed is needed to improve productive efficiency. So the laser welding machine of high output power is necessary industrially.

The improvement of welding strength needs the proper quantity of surface heat of laser-absorptive workpiece. It is necessary to try various conditions such as raising the output power, slowing the scanning speed a little, and decreasing the diameter of the laser spot. If the quantity of surface heat by the laser is much, an appearance of the welded workpiece is spoiled. If the quantity is too much, the welded workpiece fumes. So setting up the proper condition of the laser welding is very important.

In the method of the laser welding, the laser-transmissivity of the laser-transmissible resin workpiece is at least 20 % under wavelength of the irradiated laser used for the laser welding, that is ranging from approximate 800 nm of semiconductor laser to approximate 1100 nm of the yttrium aluminum garnet (YAG) laser. And it is preferable that the infrared -transmissivity is at least 15% under wavelengths of 808nm, 840nm, 940nm and 1064nm of the laser. If the transmissivity is less than the range, the sufficient quantity of the laser of those wavelengths does not transmit. So the strength of the welded workpieces is insufficient, or unusual excess energy of the laser is needed.

In the method of the laser welding, it is preferable that the laser is irradiated with scanning, and furnishes an energy quantity x(J/mm) that satisfies the following numerical expression(II).

$$x = \frac{p \times T}{100 \times q} \geqq 0.9 \quad \text{(II)}$$

(in the numerical expression (II), p(W) is the output power of the laser; q(mm/sec.) is the scanning speed of the laser; T is laser-transmissivity of the laser-transmissible resin workpiece under the wavelength of the laser)

The method for the laser welding of the present invention may be welding of the laser-absorptive resin workpiece having a laser-absorptive layer applied by ink and/or a paint including a laser-absorptive agent, and the laser-transmissible workpiece. The laser-absorptive workpiece having the laser-absorptive layer that is applied by the ink and/or the paint toward the laser-transmissible workpiece, is put onto the laser-transmissible workpiece. Then the laser is irradiated to the laser-transmissible workpiece, and the welded workpieces are obtained.

The laser-absorptive layer as the applied layer is prepared by applying of the ink and/or the paint including the laser-absorptive agent and a resin if necessary. The applying thereof is executed by an arbitrary applying procedure such as spraying, coating with a marking pen, a painting brush, a writing brush and so on. It is preferable that thickness of the applied layer is 0.1 1 mm or less.

The laser-absorptive workpieces are preferably made from the laser-absorptive colored resin composition, furthermore preferably made from the thermoplastic resin composition, including carbon black as the laser-absorptive

agent and the black colorant. It is preferable that the carbon black has the diameter of primary particles ranging 18 to 30 nm. When the above-mentioned carbon black is used, the laser-absorptive workpieces that the carbon black is dispersed sufficiently therein, absorb the laser with high absorptivity.

Nigrosine dye may be used with carbon black. It is preferable that the nigrosine dye belongs to C.I. solvent black 7. The nigrosine dye controls the proper laser-absorptivity.

The laser-absorptive colored resin composition may include another colorant instead of the carbon black; and the laser-absorptive agent such as phthalocyanines, cyanines and metal complexes. The laser-absorptive colored resin composition may include another agent as the colorant and the laser-absorptive agent.

In the laser-absorptive colored resin composition, the content of the colorant may be 0.01 to 10 weight % to the resin, preferably to the thermoplastic resin. It is further preferable that the content is colorant 0.05 to 5 weight %.

The laser-absorptive workpiece may be prepared by the same procedure of the laser-transmissible workpiece except for including the laser-absorptive agent.

Following examples are described by embodiments concretely. The invention is not intended to be limited to specific embodiments.

Manufacture Examples 1 to 5 in Table 1 show the colorant used for Examples mentioned later. Comparative Manufacture Examples 1 to 3 show the colorant used for the Comparative Examples mentioned later. In the Manufacture Examples, the acidic dyes as the colorant correspond to the dyes of the above-mentioned Compound Examples.

Incidentally, values referred to column of Compound Examples in the Table 1 show as the determined purity thereof by high pressure liquid chromatography(HPLC).

Manufacture Examples 2, 4, and 7 show the black colorant blended the dyes and the colorants in accordance with a ratio of weight indicated in a column of ratio of blending.

Table 1

| | Colorant Colorant | Ratio of Blending |
|---|---|---|
| Manufacture Example 1 | Compound Example 1-2 | |
| Manufacture Example 2 | Compound Example 1-2 | 5 |
| | Halochromy Dye of C.I. Acid Red 144 and Ditolylguanidine | 3 |
| | C.I. Acid Yellow 42 | 3 |
| Manufacture Example 3 | Compound Example 1-6 | - |
| Manufacture Example 4 | Compound Example 1-6 | 6 |
| | C.I. Acid Red 80 | 4 |
| | C.I. Acid Orange 56 | 3 |
| Manufacture Example 5 | Compound Example 1-3 | - |
| Manufacture Example 6 | Compound Example 1-7 | - |
| Manufacture Example 7 | Compound Example 1-10 | 4 |
| | C.I. Acid Red 80 | 1 |
| | C.I. Acid Orange 56 | 2 |
| Comparative Manufacture Example 1 | C.I. Acid Blue 90 | - |
| Comparative Manufacture Example 2 | C.I. Acid Blue 113 | - |
| Comparative Manufacture Example 3 | C.I. Acid Green 20 | - |
| Comparative Manufacture Example 4 | C.I. Solvent Violet 13 | 5 |
| | C.I. Solvent Yellow 114 | - |

(Determination of the purify by high pressure liquid chromatography)

The purifies of the Compound Examples are as follows.

Compound Example 1-2 is 99.4%
Compound Example 1-3 is 98.9%

Compound Example 1-6 is 99.8%

In Example 1 and Comparative Example 1, the laser-transmissible colored resin compositions including polyamide 6 resin are mentioned.

(Example 1)

400g of 45% fiber reinforced polyamide 6 resin (GF-PA6 resin) of catalog No. 1015GU9 that is available from Ube Industries, Ltd.
0.80g of the colorant of Manufacture Example 1

The above compounds were added in the tumbler made of stainless steel, and mixed with stirring for 1 hour. The obtained mixture was executed injection molding at 270 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and blue uniformly.

(Comparative Example 1)

400g of 45% fiber reinforced polyamide 6 resin of catalog No. 1015GU9 that is available from Ube Industries, Ltd.
0.80g of the colorant of Comparative Manufacture Example 3

The above compounds were added in the tumbler made of stainless steel, and mixed with stirring for 1 hour. The obtained mixture was executed injection molding at 270 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The test workpiece was green with insufficient dispersion by visual observation obviously.

In Examples 2 to 5 and Comparative Examples 2 to 3, the laser-transmissible colored resin compositions including polybutylene terephthalate are mentioned.

(Example 2)

400g of polybutylene terephthalate resin (PBT resin) of catalog No. 5008AS that is available from Mitsubishi Engineering-Plastics Corporation
0.80g of the colorant of Manufacture Example 1

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and blue uniformly.

(Example 3)

400g of polybutylene terephthalate resin of catalog No. 5008AS that is available from Mitsubishi Engineering-Plastics Corporation
0.80g of the colorant of Manufacture Example 3

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of

catalog No. Si-50 that is available from Toyo Machinery & Metal Co., Ltd. A test workpiece was obtained. The surface and appearance of the test workpiece were glossy, regular and blue uniformly.

(Example 4)

400g of polybutylene terephthalate, resin of catalog No. 5008AS that is available from Mitsubishi Engineering-Plastics Corporation
0.80g of the colorant of Manufacture Example 5

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and violet uniformly.

(Example 5)

400g of polybutylene terephthalate resin of catalog No. 5008AS that is available from Mitsubishi Engineering-Plastics Corporation
2.40g of the colorant of Manufacture Example 4

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and black uniformly.

(Example 6)

400g of polybutylene terephthalate resin of catalog No. 5008AS that is available from Mitsubishi Engineering-Plastics Corporation
0.08g of the colorant of Manufacture Example 6

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and violet uniformly.

(Example 7)

1000g of polybutylene terephthalate resin of catalog No. 5008AS that is available from Mitsubishi Engineering-Plastics Corporation
120g of the colorant of Manufacture Example 7

The above compounds were added in the tumbler made of stainless steel, and mixed with stirring for 1 hour. The obtained mixture was mixed and kneaded at 240 Centigrade degree of temperature of a cylinder using the single axial extruder machine of catalog No. E30SV that is available from Enpla Industries. Prepared strand was cooled in a water bath and cut using a pelletizer to obtain black pellets.

380g of polybutylene terephthalate resin of catalog No. 5008AS that is available from Mitsubishi Engineering-Plastics Corporation
20g of the above pellets

The above compounds were added in the tumbler made of stainless steel, and mixed with stirring for 20 minutes. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and black uniformly.

(Comparative Example 2)

400g of polybutylene terephthalate resin of catalog No. 5008AS that is available from Mitsubishi Engineering-Plastics Corporation
0.80g of the colorant of Comparative Manufacture Example 1

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The test workpiece was blue with insufficient dispersion by visual observation obviously.

(Comparative Example 3)

400g of polybutylene terephthalate resin of catalog No. 5008AS that is available from Mitsubishi Engineering-Plastics Corporation
0.80g of the colorant of Comparative Manufacture Example 2

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A test workpiece was obtained. The test workpiece was blue with insufficient dispersion by visual observation obviously.

(Comparative Example 4)

400g of polybutylene terephthalate resin of catalog No. 5008AS that is available from Mitsubishi Engineering-Plastics Corporation
2.40g of the colorant of Comparative Manufacture Example 4

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A black test workpiece was obtained.
In Examples 8 to 9 and Comparative Example 5, the laser-transmissible colored resin compositions including polypropylene resin are mentioned.

(Example 8)

400g of 30% fiber reinforced polypropylene resin (GF-PP resin) of catalog No. HG30U that is available from Japan

Polychem Co., Ltd.
0.80g of the colorant of Manufacture Example 3

The above compounds were added in the tumbler made of stainless steel, and mixed with stirring for 1 hour. The obtained mixture was executed injection molding at 220 Centigrade degree of temperature of a cylinder and 40 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and blue uniformly.

(Example 9)

400g of 30% fiber reinforced polypropylene resin of catalog No. HG30U that is available from Japan Polychem Co., Ltd.
1.20g of the colorant of Manufacture Example 2

The above compounds were added in the tumbler made of stainless steel, and mixed with stirring for 1 hour. The obtained mixture was executed injection molding at 220 Centigrade degree of temperature of a cylinder and 40 Centigrade degree of temperature of a metal mold with general procedures using the injection molding machine of catalog No. Si-50 that is available from Toyo Machinery & Metal Co., Ltd. A test workpiece was obtained. The surface and appearance of the test workpiece were glossy, regular and black uniformly.

(Comparative Example 5)

400g of 30% polypropylene resin of catalog No. HG30U that is available from Japan Polychem Co., Ltd.
0.80g of the colorant of Comparative Manufacture Example 1

The above compounds were added in the tumbler made of stainless steel, and mixed with stirring for 1 hour. The obtained mixture was executed injection molding at 220 Centigrade degree of temperature of a cylinder and 40 Centigrade degree of temperature of a metal mold with general procedures using the injection molding machine of catalog No. Si-50 that is available from Toyo Machinery & Metal Co., Ltd. A test workpiece was obtained. The test workpiece was blue with insufficient dispersion by visual observation obviously.

(Physical Evaluation)

The test workpieces made from the laser-transmissible colored resin composition obtained in Examples 1 to 9 and Comparative Examples 1 to 5, and the molded non-colored test workpieces made similarly, were evaluated by the following physical evaluation methods. The results thereof are shown in tables 2 to 4.

(1) Determination of the transmissivity

Each of test workpiece was set up onto a spectrophotometer of catalog No. V-570 that is available from JASCO Corporation. The transmissivity of a portion with thickness of 1.5mm of the workpiece 1 that is shown in Fig. 1 was determined under the wavelength ranging from 400 to 1200 nm. In tables 2 to 4, the transmissivity of the test workpieces under the wavelength of 940nm by semiconductor laser, are shown.

(2) Heat resistance test and its evaluation

When the injection molding was executed in Examples 1 to 9 or Comparative Examples 1 to 5, a part of the blended mixture as the laser-transmissible colored resin composition was executed general shots of the injection molding, to obtain initiative test workpieces. The remainder of the mixture in the cylinder was kept at the same temperature of the cylinder for 15 minutes, and then it was executed the same shots of the injection molding to obtain subsequent test workpieces.
The hues of the initiative test workpieces that is obtained by the general shots and the subsequent test workpieces that is obtained by the same shots after keeping in the cylinder for 15 minutes, were compared. When the hue

of the subsequent test workpieces was not faded out as compared with the initiative test workpieces, it was judged to have the heat resistance.

(3) Sublimation resistance test and its evaluation

The test workpieces were put onto white polyethylene terephthalate(PET) films respectively, and they were kept in an oven at 160 Centigrade degree for 3 hours. The PET films were removed from the test workpieces, and put onto a sheet for over head projector (OHP) in order to observe easily.
When the colorant does not migrate to the PET films, it was judged to have the sublimation resistance.

(4) Preparation of the laser-absorptive test workpiece and its laser welding test

The laser-absorptive test workpiece as the laser-absorptive workpiece using the polyamide 6 resin was prepared as follows.

400g of 45% fiber reinforced polyamide 6 resin of catalog No. 1015GU9 that is available from Ube Industries, Ltd.
0.40g of the carbon black

The above compounds were added in the tumbler made of stainless steel, and mixed with stirring for 1 hour. The obtained mixture was executed injection molding at 270 Centigrade degree of temperature of a cylinder and 80 Centigrade degree of temperature of a metal mold with general procedures using the injection molding machine of catalog No. Si-50 that is available from Toyo Machinery & Metal Co., Ltd. A laser-absorptive test workpiece was obtained. The surface and appearance of the test workpiece were glossy, regular and black uniformly.
The other laser-absorptive test workpiece as the laser-absorptive workpiece using the polybutylene terephthalate resin was prepared as follows.

400g of polybutylene terephthalate resin of catalog No. 5008AS that is available from Mitsubishi Engineering-Plastics Corporation
2.00g of the carbon black

The above compounds were added in the tumbler made of stainless steel, and mixed with stirring for 1 hour. The obtained mixture was executed injection molding at 260 Centigrade degree of temperature of a cylinder and 80 Centigrade degree of temperature of a metal mold with general procedures using the injection molding machine of catalog No. Si-50 that is available from Toyo Machinery & Metal Co., Ltd. A laser-absorptive test workpiece was obtained. The surface and appearance of the test workpiece were glossy, regular and black uniformly.
The other laser-absorptive test workpiece as the laser-absorptive workpiece using the polypropylene resin was prepared as follows.

400g of 30% fiber reinforced polypropylene resin of catalog No. HG30U that is available from Japan Polychem Co., Ltd.
0.80g of the carbon black

The above compounds were added in the tumbler made of stainless steel, and mixed with stirring for 1 hour. The obtained mixture was executed injection molding at 220 Centigrade degree of temperature of a cylinder and 40 Centigrade degree of temperature of a metal mold with general procedures using the injection molding machine of catalog No. Si-50 that is available from Toyo Machinery & Metal Co., Ltd. A laser-absorptive test workpiece was obtained. The surface and appearance of the test workpiece were glossy, regular and black uniformly.
As shown in Fig. 1, each of the laser-transmissible test workpiece 1 of Examples 1 to 6 and Comparative Examples 1 to 4 and each of the above-mentioned laser-absorptive test workpiece 2 have length of 60mm, width of 18mm, thickness of 3mm with the proviso of the thickness of 1.5mm of the end portion of length of 20mm from the edge. Each of the end portion of the workpieces having length of 20mm, width of 18mm, thickness of 1.5mm, were put together.
The diode laser machine having 30W of the output power that is available form Fine Device Co., Ltd. was used. The scanning laser beam 3 of the continuous wavelength of 940nm was irradiated onto the put portion to a transverse direction; a depth direction of Fig.1, by the machine under 750mm/min. of the scanning speed.
The laser transmitted through the laser-transmissible test workpiece 1, and was absorbed into the laser-absorptive test workpiece 2. The laser-absorptive test workpiece 2 caused the exothermic then melted at a laser-absorbing neighborhood by the exothermic. And the laser-transmissible test workpiece 1 was melted thereby, to weld

both workpieces. After cooling, the both workpieces were joined tightly. The portion 6 in Fig. 1 shows the melted portion.

(5) Tensile strength test

The welded workpieces of the above-mentioned (4) paragraph, were used. As regards the welded workpieces, they were tensed under 10mm/min. of tensile speed to both opposite dimensions of lengthwise of a laser-transmissible test workpiece 1 side and a laser-absorptive test workpiece 2 side: the dimensions pulled the workpiece 1 and the workpiece 2 apart in accordance with JIS K 7113-1995, to determine the tensile strength of welding by the tensile strength test.

Table 2

| Examples and Comparative Examples Using Polyamide 6 Resin | | | | | |
|---|---|---|---|---|---|
| | (1) Transmissivity (%) | (2) Heat Resistance Test | (3) Sublimation Resistance Test | (4) Laser Welding Test | (5) Tensile Strength (Mpa) |
| GF-PA6 Resin | 69 | - | - | - | - |
| Example 1 | 61 | Excellent | Excellent | No Problem | 33.8 |
| Comparative Example 1 | - | - | - | - | - |

Table 3

| Examples and Comparative Examples Using Polybutylene Terephthalate Resin | | | | | |
|---|---|---|---|---|---|
| | (1) Transmissivity (%) | (2) Heat Resistance Test | (3) Sublimation Resistance Test | (4) Laser Welding Test | (5) Tensile Strength (Mpa) |
| PBT Resin | 37 | - | - | - | - |
| Example 2 | 36 | Excellent | Excellent | No Problem | 26.8 |
| Example 3 | 35 | Excellent | Excellent | No Problem | 27.0 |
| Example 4 | 34 | Excellent | Excellent | No Problem | 26.2 |
| Example 5 | 31 | Excellent | Excellent | No Problem | 25.7 |
| Example 6 | 31 | Excellent | Excellent | No Problem | 25.2 |
| Example 7 | 30 | Excellent | Excellent | No Problem | 24.7 |
| Comparative Example 2 | - | - | - | - | - |
| Comparative Example 3 | - | - | - | - | - |
| Comparative Example 4 | 33 | Excellent | bad | No Problem | 26.0 |

Table 4

| Examples and Comparative Examples Using Polypropylene Resin | | | | | |
|---|---|---|---|---|---|
| | (1) Transmissivity (%) | (2) Heat Resistance Test | (3) Sublimation Resistance Test | (4) Laser Welding Test | (5) Tensile Strength (Mpa) |
| GF-PP Resin | 48 | - | - | - | - |

Table 4 (continued)

| Examples and Comparative Examples Using Polypropylene Resin | | | | | |
|---|---|---|---|---|---|
| | (1) Transmissivity (%) | (2) Heat Resistance Test | (3) Sublimation Resistance Test | (4) Laser Welding Test | (5) Tensile Strength (Mpa) |
| Example 8 | 43 | Excellent | Excellent | No Problem | 27.5 |
| Example 9 | 41 | Excellent | Excellent | No Problem | 27.1 |
| Comparative Example 5 | - | - | - | - | - |

It is evident with Tables that the transmissivity, the heat resistance, the sublimation resistance, the laser welding property and the tensile strength of the workpieces of the Examples are all excellent.

**Claims**

**1.** A laser-transmissible colored resin composition comprising an anthraquinone-type acidic dye represented by the following chemical formula (1)

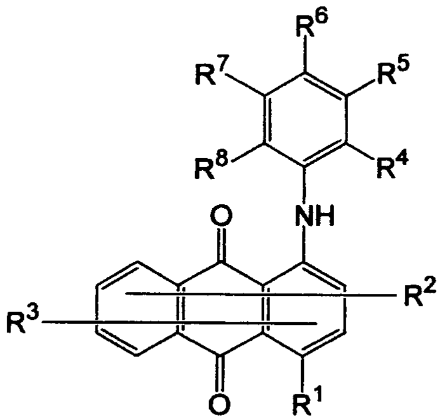

· · · (1)

[in the chemical formula (1),

$-R^1$ is selected from the group consisting of a hydrogen atom, a hydroxyl group and an amino group,

$-R^2$ and $-R^3$ are same or different to each other, and one thereof is selected from the group consisting of a hydrogen atom, an alkyl group, a halogen atom, an alkoxyl group and $-SO_3M$ that M is a hydrogen atom, an alkaline metal or an ammonium,

$-R^4$, $-R^5$, $-R^6$, $-R^7$- and $-R^8$ are same or different to each other, and one thereof is selected from the group consisting of a hydrogen atom, an alkyl group, an acyl group, an acylamide group, an acyl-N-alkylamide group, a halogen atom, an alkoxyl group and $-SO_3M$ which M is same above,

and at least one of $-R^2$, $-R^3$, $-R^4$, $-R^5$, $-R^6$, $-R^7$ and $-R^8$ is $-SO_3M$

or the following chemical formula (2)

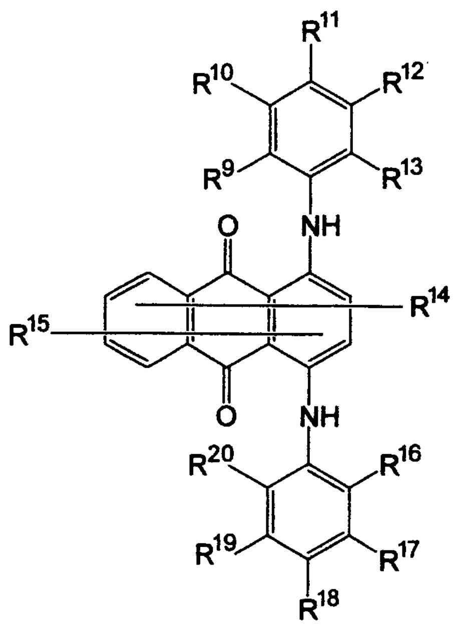

. . . (2)

[in the chemical formula (2),

$-R^{14}$ and $-R^{15}$ are same or different to each other, and one thereof is selected from the group consisting of a hydrogen atom, an alkyl group, a halogen atom, an alkoxyl group an amino group, a nitro group, and $-SO_3M$ that M is same above,

$-R^9$, $-R^{10}$, $-R^{11}$, $-R^{12}$, $-R^{13}$, $-R^{16}$, $-R^{17}$, $-R^{18}$, $-R^{19}$, and $-R^{20}$ are same or different to each other, and one thereof is selected from the group consisting of a hydrogen atom, an alkyl group, an acyl group, an acylamide group, an acyl-N-alkylamide group, a halogen atom, an alkoxyl group and $-SO_3$ which M is same above,

and at least one of $-R^9$, $-R^{10}$, $-R^{11}$, $-R^{12}$, $-R^{13}$, $-R^{14}$, $-R^{15}$, $-R^{16}$, $-R^{17}$, $-R^{18}$, $-R^{19}$, and $-R^{20}$ is $-SO_3M$

**2.** The laser-transmissible colored resin composition according to claim 1, wherein the anthraquinone-type acidic dye has 90 % or more of purity.

**3.** The laser-transmissible colored resin composition according to claim 1, wherein the anthraquinone-type acidic dye has a wavelength of absorption maximum ranging 580 to 630 nm.

**4.** The laser-transmissible colored resin composition according to claim 1, comprising a thermoplastic resin.

**5.** The laser-transmissible colored resin composition according to claim 4, wherein the thermoplastic resin is a polyester resin.

**6.** The laser-transmissible colored resin composition according to claim 5, wherein the polyester resin is a copolymer prepared from components comprising terephthalic acid and 0.5 to 5 mol% of a bifunctional carboxylic acid excluding said terephthalic acid.

**7.** The laser-transmissible colored resin composition according to claim 5, wherein the polyester resin includes a main component of polybutylene terephthalate resin.

**8.** The laser-transmissible colored resin composition according to claim 1, comprising a blended colorant that is blended with the anthraquinone-type acidic dye and a yellow and/or red dye to give black.

**9.** A method for laser welding comprising:

putting a laser-transmissible workpiece made from a laser-transmissible colored resin composition which comprises an anthraquinone-type acidic dye represented by the following chemical formula (1)

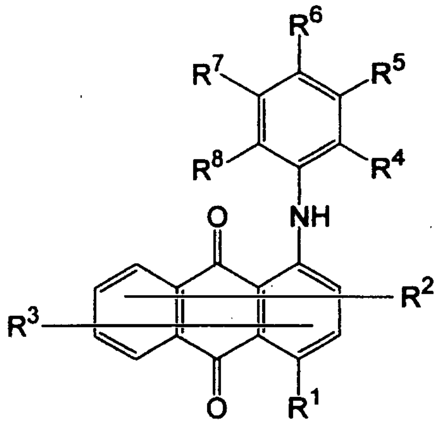

・・・(1)

[in the chemical formula (1),

-$R^1$ is selected from the group consisting of a hydrogen atom, a hydroxyl group and an amino group,

-$R^2$ and -$R^3$ are same or different to each other, and one thereof is selected from the group consisting of a hydrogen atom, an alkyl group, a halogen atom, an alkoxyl group and -$SO_3$ that M is a hydrogen atom, an alkaline metal or an ammonium,

-$R^4$, -$R^5$, -$R^6$, -$R^7$- and -$R^8$ are same or different to each other, and one thereof is selected from the group consisting of a hydrogen atom, an alkyl group, an acyl group, an acylamide group, an acyl-N-alkylamide group, a halogen atom, an alkoxyl group and -$SO_3M$ which M is same above,

and at least one of -$R^2$, -$R^3$, -$R^4$, -$R^5$, -$R^6$, -$R^7$ and -$R^8$ is -$SO_3M$

or the following chemical formula (2)

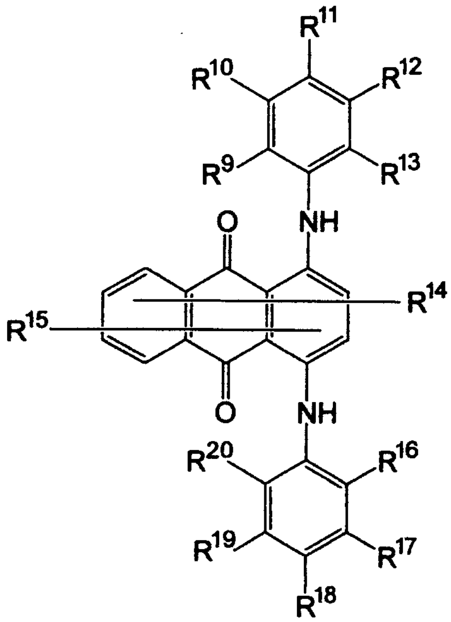

・・・(2)

[in the chemical formula (2),

-$R^{14}$ and -$R^{15}$ are same or different to each other, and one thereof is selected from the group consisting of a hydrogen atom, an alkyl group, a halogen atom, an alkoxyl group an amino group, a nitro group, and -$SO_3$ that M is same above,

-$R^9$, -$R^{10}$, -$R^{11}$, -$R^{12}$, -$R^{13}$, -$R^{16}$, -$R^{17}$, -$R^{18}$, -$R^{19}$, and -$R^{20}$ are same or different to each other, and one thereof is selected from the group consisting of a hydrogen atom, an alkyl group, an acyl group, an acylamide group, an acyl-N-alkylamide group, a halogen atom, an alkoxyl group and -$SO_3$ which M is same above,

and at least one of -$R^9$, -$R^{10}$, -$R^{11}$, -$R^{12}$, -$R^{13}$, -$R^{14}$, -$R^{15}$, -$R^{16}$, -$R^{17}$, -$R^{18}$, -$R^{19}$, and -$R^{20}$ is -$SO_3M$

and a laser-absorptive workpiece together,
irradiating laser to the laser-transmissible workpiece,
welding the laser-transmissible workpiece and the laser-absorptive workpiece at put portion thereof together, by the laser that transmits through the laser-transmissible workpiece and is absorbed into the laser-absorptive workpiece.

**10.** The method for the laser welding according to claim 9, wherein the anthraquinone-type acidic dye has 90 % or more of purity.

**11.** The method for the laser welding according to claim 9, wherein the anthraquinone-type acidic dye has a wavelength of absorption maximum ranging 580 to 630 nm.

**12.** The method for the laser welding according to claim 9, wherein comprising a thermoplastic resin.

**13.** The method for the laser welding according to claim 12, wherein the thermoplastic resin is a polyester resin.

**14.** The method for the laser welding according to claim 13, wherein the polyester resin is a copolymer prepared from components comprising terephthalic acid and 0.5 to 5 mol% of a bifunctional carboxylic acid excluding said terephthalic acid.

**15.** The method for the laser welding according to claim 13, wherein the polyester resin includes a main component of polybutylene terephthalate resin.

**16.** The method for the laser welding according to claim 9, comprising a blended colorant that is blended with the anthraquinone-type acidic dye and a yellow and/or red dye to give black.

**17.** The method for the laser welding according to claim 9, wherein the laser-absorptive workpiece are made from the laser-absorptive colored resin composition, which at least comprises carbon black of colorant.

**18.** The method for the laser welding according to claim 9, wherein the laser is irradiated with scanning, and furnishes an energy quantity x(J/mm) that is satisfied the following numerical expression

$$x = \frac{p \times T}{100 \times q} \geqq 0.9$$

[in the numerical expression, p(W) is output power of the laser, q(mm/sec.) is scanning speed of the laser; T is transmittance of the laser-transmissible workpiece under wavelength of the laser].

Fig. 1

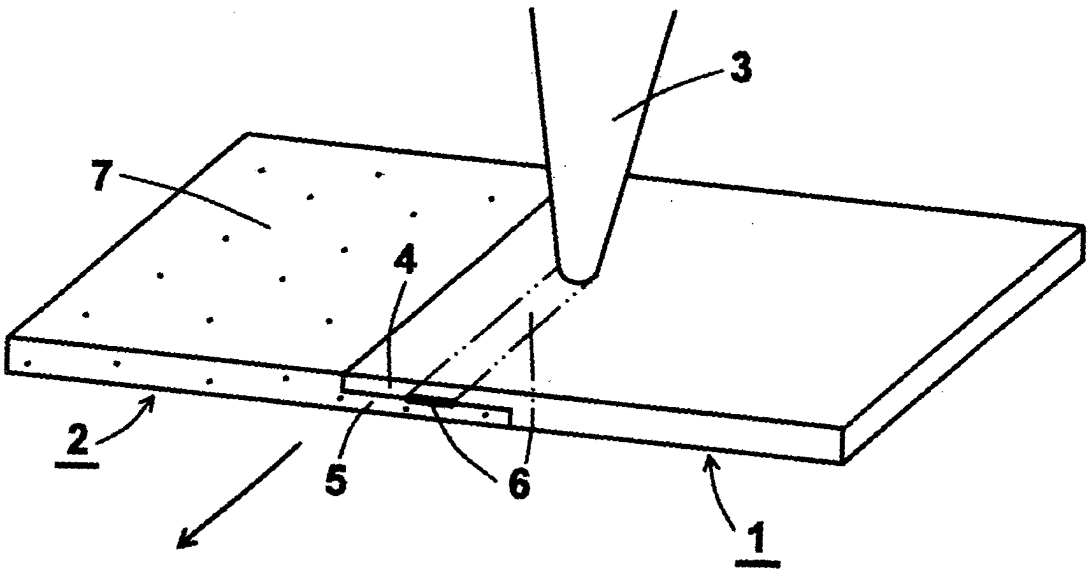

European Patent Office

# EUROPEAN SEARCH REPORT

Application Number
EP 04 02 4146

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | JP 2002 228830 A (ORIENT CHEM IND LTD) 14 August 2002 (2002-08-14) * compounds 10-1,10-2,10-3,10-9 TO 10-14,12-1 * ----- | 1-8 | B29C65/16 C09B67/00 C08K5/42 |
| Y | WO 02/057353 A (E.I. DUPONT DE NEMOURS AND COMPANY; ORIENT CHEMICAL INDUSTRIES, LTD) 25 July 2002 (2002-07-25) * examples 4,7,8 * ----- | 9-18 | |
| Y | EP 1 029 650 A (TICONA GMBH) 23 August 2000 (2000-08-23) * the whole document * ----- | 9-18 | |
| Y | US 2003/125429 A1 (JOACHIMI DETLEV ET AL) 3 July 2003 (2003-07-03) * table I * ----- | 9-18 | |

TECHNICAL FIELDS SEARCHED (Int.Cl.7)

B29C

The present search report has been drawn up for all claims

| Place of search | Date of completion of the search | Examiner |
|---|---|---|
| Munich | 11 March 2005 | Friebel, F |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 02 4146

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2005

| Patent document cited in search report | Publication date | Patent family member(s) | Publication date |
|---|---|---|---|
| JP 2002228830 A | 14-08-2002 | NONE | |
| WO 02057353 A | 25-07-2002 | CA 2423779 A1 | 25-07-2002 |
| | | EP 1334147 A2 | 13-08-2003 |
| | | JP 2004517995 T | 17-06-2004 |
| | | WO 02057353 A2 | 25-07-2002 |
| | | US 2003039837 A1 | 27-02-2003 |
| EP 1029650 A | 23-08-2000 | DE 19906828 A1 | 24-08-2000 |
| | | DE 50006364 D1 | 17-06-2004 |
| | | EP 1029650 A1 | 23-08-2000 |
| | | JP 2000309694 A | 07-11-2000 |
| | | US 2002002225 A1 | 03-01-2002 |
| US 2003125429 A1 | 03-07-2003 | DE 19960104 A1 | 21-06-2001 |
| | | AT 252128 T | 15-11-2003 |
| | | AU 773611 B2 | 27-05-2004 |
| | | AU 2004001 A | 25-06-2001 |
| | | BR 0016387 A | 20-08-2002 |
| | | CA 2394094 A1 | 21-06-2001 |
| | | CZ 20022080 A3 | 13-11-2002 |
| | | DE 50004110 D1 | 20-11-2003 |
| | | WO 0144357 A1 | 21-06-2001 |
| | | EP 1240243 A1 | 18-09-2002 |
| | | EP 1258506 A1 | 20-11-2002 |
| | | ES 2210021 T3 | 01-07-2004 |
| | | HU 0203827 A2 | 28-03-2003 |
| | | JP 2003517075 T | 20-05-2003 |
| | | MX PA02005872 A | 28-01-2003 |
| | | PL 355482 A1 | 04-05-2004 |
| | | SK 8112002 A3 | 04-02-2003 |
| | | ZA 200204239 A | 28-05-2003 |

EPO FORM P0459

For more details about this annex : see Official Journal of the European Patent Office, No. 12/82